# EUROPEAN PATENT APPLICATION

(11) **EP 2 587 756 A1**
(43) Date of publication of application: **01.05.2013**
(21) Application number: 11382335.5
(22) Date of filing: 31.10.2011
(51) Int. Cl.: H04L 29/06

(54) **Method, system and devices for media content consumption protection**

(71) Applicant: Alcatel-Lucent España, S.A., 28050 Madrid (ES)
(72) Inventor: Villegas Nuñez, Alvaro, 28050 Madrid (ES); Van Boven, Christian, 28050 Madrid (ES)
(74) Representative: Carpintero Lopez, Francisco

(57) **Abstract**

A method, a system, a key server node and an end device are provided for media content protection. The media content is encrypted and downloaded to the end device from a service provider, the media content having associated entitlement rules which define under which playback conditions the media content is allowed to be played. Said entitlement rules are evaluated by a network node which provides to the end device, the decryption key(s) needed to decrypt the downloaded media content if the end device is entitled to play the media content under certain playback conditions. This solution overcomes some of the drawbacks presented in the prior art.

## Description

### BACKGROUND OF THE INVENTION

### Technical field

The present invention relates to the protection of content consumption and more specifically to protection of media content consumption.

### Description of related art

All business based on the delivery of content (specially mulimedia content) require some kind of content protection to ensure that media is consumed only by entitled customers under the terms and conditions established by the service provider. The particular content protection technology used in each case depends highly on the topology of the delivery chain and the exact conditions under which the content will be consumed. In particular, the device characteristics and the connection status strongly influences the solution to be adopted:
- A full connected device used for watching streamed content only will typically use a so called Conditional Access Solution (CAS), which essentially protects the delivery pipe. Typical examples of this case may be a satellite direct-to-home (DTH) operator or an Internet Protocol Television (IPTV) platform.
- Connected devices with storage capability or which can retrieve content from other devices at home need a different protection, with usage rules that need to be enforced at client side at the time of consumption. This scenario addresses a more "horizontal" type of devices (including retail devices) and requires the usage of a more complex (and risky) technology, called generically Digital Rights Management (DRM), although some CAS vendors have already included some extensions that enable this use case. DRM refers to access control technologies used for example by publishers and other copyright holders to limit usage of digital works or devices.

There are a big amount of different DRM vendors. Some of them even require special hardware at client side (e.g. a smartcard, a PCMCIA, a chipset with embedded secure engines, etc). The execution of the technology is usually done through encryption at server side (in a TV headend, a service provider, a content preparation site or in some cases in a delivery node in the network) and then decryption in the terminal device, running a secure agent (SW and/or hardware) which evaluates the fulfillment of the usage rules when the media is going to be consumed.

The extreme case of the offline consumption is the "sync and go" model. In an exemplary embodiment of this model, the end device is synchronized at home (directly or through a permanently connected device such as a PC) in order to download content into it. Then the device is disconnected, and the content is intended to be accessed afterwards in any location, using the end device. This end device can be, for example, a mobile phone, an electronic book or a tablet.

That is, in this model, the content to be consumed has been previously downloaded into the device ("sync") and then the consumption is done purely offline ("on the go") so there is no need for downloading it or stream it when the content is to be consumed (played).

It is in this last case where the content protection technologies presents more problems.

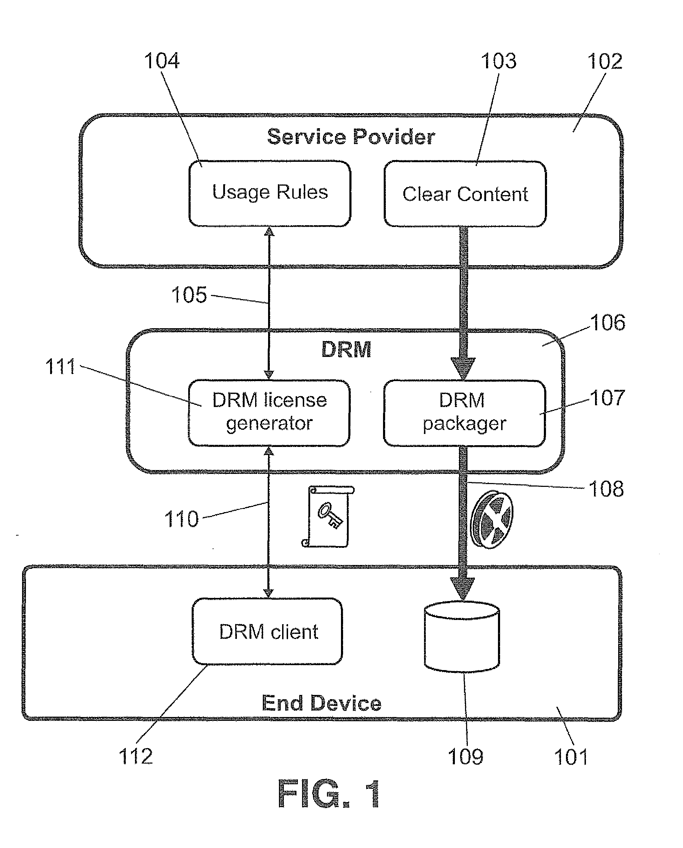

To date, the only technology that has been used for "sync and go" technologies is a full DRM solution. This full DRM solution is shown in figure 1. The service provider (102) stores the content to be downloaded (103) and the Usage Rules (also known as Entitlement Rules) (104) for said content. These Usage Rules refer to the entitlement of the user to access the content to be consumend in special consumption conditons. One extreme example of said usage rules can be : "this movie can be watched ony by users above 18, three times at most, only two of them HD, never on weekends, between may 1^{st} and 24^{th} and only if the basic subscription package has been purchased".

The Usage Rules, usually defined by the Service Provider, are mapped (105) to the rules available in the DRM application (106) used. The DRM generates a key to encrypt the content (by the DRM packager 107) and then the content is downladed (108) and stored (109) in the end device 101 (e.g. a mobile device). During the downlading and synchronization, a DRM license with the decryption key and the usage rules is also downloaded into the device (110) by the DRM license generator (111). Then, once the device is on its own, when the playback is requested by the user the DRM client in the device checks the rules (for example, checking using the license information) and, when appropriate, it delivers the key to the decryptor and eventually the media is decoded and presented. This solution therefore involves the existance in the clients device of a DRM client application (112) which can receive, manage and, when needed, check the usage rules sent by the DRM.

This solution has a number of important drawbacks:
- Security: the presence of the decryption key at the end device makes it an ideal target for hackers. The whole security depends then on the strength of the DRM client implementation. If the device can be hacked for circumventing the usage rules or, worse, if the key can be extracted in the clear, the content can be further used without restrictions in the device or in fact in any other devices. The more complex DRM client implementation (also called the secure agent) in the terminal device is, the more weak points it will have because it is much easier to protect a simple agent that just does a couple of decryptions than a generic engine that executes a program with rules (actually, hacking the program itself is another way of hacking). So, the complexity of DRMs (because of the local rules enforcement) is a main weakness with respect to security.
- It is very difficult for operators to track the usage of the content. Even if the usage is legal, for commercial reasons it is benefitial for service providers to know the details of the consumption of purchased content. While this is trivial in a connected environment and feasible in a connected home environment, a pure "sync and go" model makes it really hard to achieve.
- High cost: DRMs are very expensive, both in integration cost and specially in licensing at server and client side. Providers of DRM solutions charge a license per user at server side and at client side, per user. This cost ends up being one of the most relevant components of the overall operator investment.
- Lack of flexibility: Using a DRM in this context means delegating the usage rules to the DRM client, what means that the rules defined by the service provider need to be mapped first to the limited rules available in the particular DRM and from there to the DRM client implementation.
- No interoperability: virtually all DRMs are incompatible with each other. This means that content needs to be packaged with a specific format and DRM-specific licenses need to be generated and downloaded for each particular set of devices. This is obviously a big hurdle for the deployment of multiscreen video services.

It is an object of the present embodiments of the invention to overcome at least some of these drawbacks.

### SUMMARY

In light of the present need for protection of content consumption, a brief summary of various exemplary embodiments is presented. Some simplifications and omissions may be made in the following summary, which is intended to highlight and introduce some aspects of the various exemplary embodiments, but not to limit its scope. Detailed descriptions of preferred exemplary embodiments adequate to allow those of ordinary skill in the art to make and use the invention concepts will follow in later sections.

Content protection has been generally performed using client digital rights management (DRM) solutions. This type of solutions are not always efficient for content protection, especially for devices which do not retrieve the content (downloaded or streamed) at the same moment when it is to be consumed or reproduced (played) (the called "sync and go" type devices). The DRM solutions imply the use in the terminal client device of complex and risky (from the security point of view) DRM applications in the client terminal device, and they use proprietary means specific for certain media producers or DRM solution provider only.

It is an object of the invention to provide a new set of technical solutions overcoming the above referenced limitations.

According to an aspect of the invention a method is provided for media content protection, said method comprising:
a) establishing a first connection with a service provider through a first communication network
b) sending through said connection, a download request of a certain media content, wherein said request to download the media content is sent in response to a request for the media content initiated by an end-user of an end device; said media content having associated entitlement rules which define under which playback conditions the media content is allowed to be played. This entitlement rules are usually provided by the service provider.
c) encrypting the requested media content with an encryption key provided by a key server node
d) downloading the requested encrypted media content
e) storing the encrypted media content in the end device
f) authenticating the end device by the key server node
g) evaluating in a network node (usually belonging to the first communication network) the entitlement rules a the encrypted media for the end device and for certain playback conditions to decide if the end device is entitled to play the media content under said certain playback conditions
h) if, as a result of the evaluation, it is decided that the end device is entitled to playback the media content under said certain playback conditions, the key server node sends the decryption key needed to decrypt the media content to the end device.

Said media content may be for example, video files in any format, audio files in any format, music files in any format, e-books in any format or any other type of content.

The order of the method steps is not a critic issue, so other method steps orders are also possible.

The entitlement rules can be among others subscriptions permissions, allowed users, days and times when the content can be played, type of media player which can play the content or maximum number of times the content can be played.

In an embodiment of the invention, the decryption key is valid only in a certain time frame established by the key server and the decryption key can referred to a set of keys necessary to decrypt the media content.

In an embodiment of the invention, the step of evaluating the entitlement rules for the end device and for certain consumption conditions is performed when an end user of the end device requests to play the encrypted media content (that is, at playback time) and said step comprises the following steps:
g1) when a end user of the end device requests to play the encrypted media content, the end device establishes a connection with the Key Server Node, different from the first connection, through a second telecommunication network
g2) the end-device sending, using said connection, a Key Request (309) to the Key Server Node (305) requesting a decryption key for the encrypted media content.
g3) the Key Server Node obtaining the playback conditions under which the content is going to be played
g4) evaluating the entitlement rules for the encrypted media for certain playback conditions by matching said obtained playback conditions with the entitlement rules associated to the media content
   and where the step of authenticating the end device by the key server node is performed when the key server node receives the Key Request from the end device

In an embodiment of the invention, the first and the second telecommunication network are the same telecommunication network.

The end device can have no direct connection with the first communication network, so the communication between the end device and the service provider in steps a) b) and d) is made through an intermediate device connected to the first communication network and connected to the end device. That is, the steps of establishing the communication with the service provider, sending the request to download the media content and receiving the downloaded media content respectively are made by the intermediate device. Of course, once the media content is downloaded, the intermediate device forwards it to the end device.

In an alternative embodiment, the end device is able to be connected directly with the first communication network (it has direct access) to the first communication network and, therefore, the end device performs directly the steps a), b) and d) of establishing the communication with the service provider, sending the request to download the media content and receiving the downloaded media content respectively.

In an embodiment, the key server node is in different location as the service provider and the key server node is connected with the service provider via a telecommunication network.

In another embodiment, the step of evaluating the entitlement rules for the end device and for certain playback conditions is made at the time of the downloading and if, as a result of the evaluation, the end device is entitled to play the media content, the key server node sending the decryption key needed to decrypt the media content to the end user, the method further includes:
i) storing in an internal memory of the end device the decryption key sent by the key server
j) when the end user of the end device requests to play the encrypted media content, the end device gets from the internal memory the correspondent key to decrypt said media content

In any of these embodiments, the network node performing the step of evaluating the entitlement rules can be the Key Server node or the service provider or any other network node. If the evaluating step is not performed by the key server node, after the evaluation the result of the evaluation is sent by the network node performing the evaluation, to the Key Server Node

In the above embodiment, in the evaluating step, the entitlement rules not only are evaluated for the just downloaded media content but for further media content previously downloaded in the end-device, and if, as a result of the evaluation, an end-user of the end device is entitled to play any of the evaluated media content stored in the end device, the key server sends the decryption key needed to decrypt said media content to the end device. That is, the entitlement rules can be evaluated also for other media content already stored in the end device, different from the just downloaded media content and decryption keys can be sent to decrypt said other media contents.

In an exemplary embodiment, the key will be destroyed by the end device when the session, e.g. the playback session, finishes.

According to another aspect of the invention a key server node is provided, said node comprising:
- means for providing a encryption key to a service provider to encrypt a media content; said media content having associated entitlement rules which define under which playback conditions the media content is allowed to be played
- means for authenticating an end device
- means for evaluating the entitlement rules associated to the encrypted media content for the end device and for certain playback conditions, or means for requesting this evaluation to another network node
- means for sending to the end device through a secure channel of a telecommunication network, the decryption key needed to decrypt the media content, if as a result of the evaluation, the end device is entitled to play the media content under said certain playback conditions.

In said key server node according, the means for evaluating the entitlement rules for the encrypted media for the end device further may include:
- means for receiving from the end device, a Key Request (309) when the end user of the end device requests to play the encrypted media content means for securely authenticating the end device from which the request is received
- means for obtaining the playback conditions under which the media content is going to be played
- means for matching said conditions with the entitlement rules associated to the media content.

According to another aspect of the invention an end device is provided, comprising:
- means for initiating a request for a media content
- means for receiving and storing said media content encrypted
- means for, when an end user of the end device request to play the encrypted media content, establishing a connection with a Key Server node through a telecommunication network (the second telecommunication network mentioned before)
- means for sending, using said established connection, a Key Request (309) to the Key Server node (305) requesting a decryption key to decrypt the encrypted media content
- means for decrypting the media content with the received decryption key. According to another aspect of the invention a system for media content protection is provided, said system comprising
- An end device having means for initiating a request for a media content, wherein said request triggers a download request to a service provider through a first communication network and where said media content having associated entitlement rules which define which end users and under which conditions the media content is allowed to be played
- The end device having means for receiving and storing said media content encrypted
- The end device having means for decrypting the media content with a decryption key received from a key server node.
- A key server node having means for providing a key to a service provider to encrypt the media content
- The key server node having means for authenticating the device which is initiating the request
- The key server node having means for evaluating the entitlement rules associated to the encrypted media for an end device and for certain playback conditions or means for requesting this evaluation to another network node
- The key server node having means for sending the decryption key needed to decrypt the media content to the end user, if as a result of the evaluation, the end-user of the end device is entitled to play the media content under said playback conditions

In said system, the end device further can include:
- Means for, when an end user of the end device requests to play the encrypted media content, establishing a connection with a Key Server through a telecommunication network
- Means for sending, using said established connection, a Key Request (309) to the Key Server node (305) requesting a key to decrypt the encrypted media content

According to another aspect of the invention, a computer program product is provided, comprising computer-executable instructions for performing any of the method previously disclosed, when the program is run on a computer and a digital data storage medium is also provided encoding a machine-executable program of instructions to perform any of the methods disclosed.

These and other aspects of the invention will be apparent from and elucidated with reference to the embodiments described hereinafter.

### BRIEF DESCRIPTION OF THE DRAWINGS

Some embodiments of the method, system and device in accordance with embodiments of the present invention are now described, by way of example only, and with reference to the accompanying drawings, in which:
Figure 1 shows a block diagram of a full DRM solution according to a prior art implementation.
Figures 2a and 2b show schematic diagrams of different exemplary systems where embodiments of the present invention are going to be implemented.
Figure 3a and 3b shows a block diagram of an embodiment of the present invention in a first type of scenario.
Figure 4a and 4b shows a block diagram of an embodiment of the present invention in a second type of scenario.

Throughout the figures like reference numerals refer to like elements.

### DESCRIPTION OF EMBODIMENTS

The present inventions may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope

The following embodiments refer to solutions for media protection. These embodiments are specially efficient in the "sync and go" models. Here, with the term "sync and go ", we refer to said scenarios where the end device (also called terminal device) downloads the content from a service provider either directly (with a connection with the server provider through a communication network) or indirectly (with no direct connection with the service provider but being connected with a wired or wireless connection to an intermediate device, e.g. a computer, said intermediate device being connected the server provider through a communication network in order to download the content and then forward the content to the end device). After the content has been downloaded, the device may be disconnected (from the communication network or from the intermediate device respectively) and the content is intended to be accessed afterwards in any location, using the end device. That is, the content to be consumed has been previously downloaded into the device and then the consumption is done purely offline so there is no need for downloading it or stream it when the content is to be consumed (played).

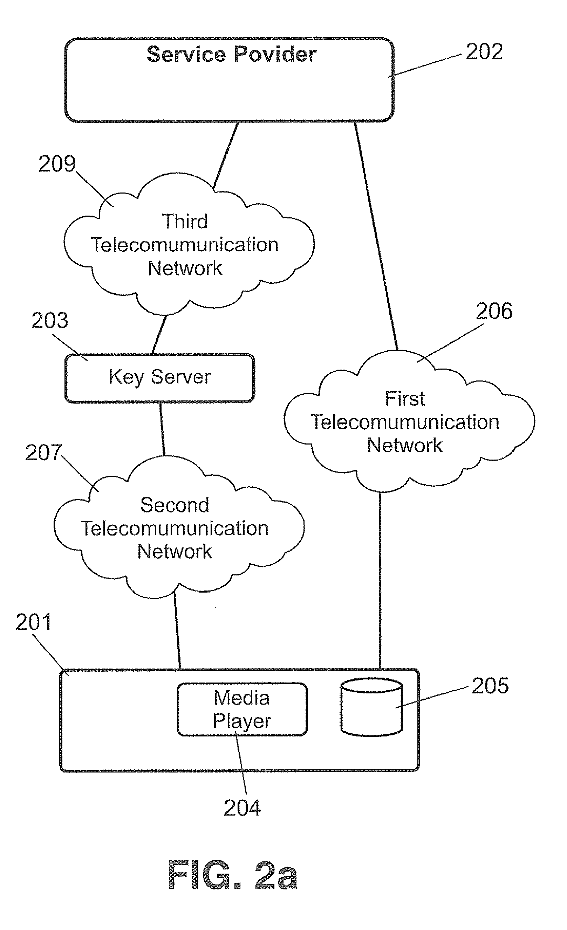

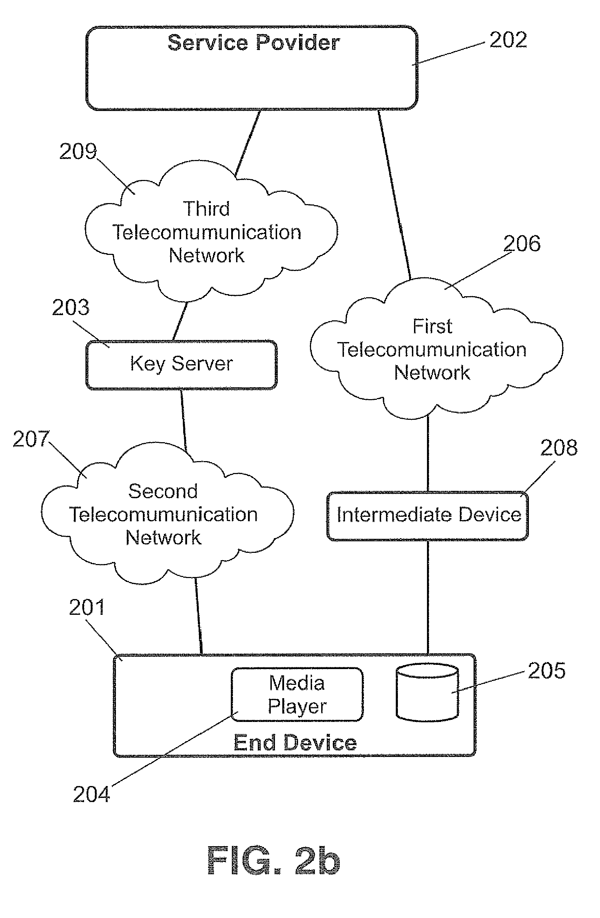

Figures 2a and 2b show schematic diagrams of different exemplary systems where embodiments of the present invention can be implemented. The systems include an end device 201 (where the media content is to be consumed), a Service Provider 202 and a Key Server Node 203. The end device may include a Media Player 204 (to play the media content) and a memory module 205 (to store the media content). The Service provider is connected with the end device through a first communication network (206), and the key server node is connected with the end device through a second communication network (207). The key server is a network node belonging to a communication network, for example, to the same telecommunication network of the service provider.

Hence there is no DRM client complex module in the client end device, so an standard equipment without specific complex modules for the DRM application can be used.

As explained above, in an alternative case (2b), the end device will not be connected directly to the service provider via a communication network, but an intermediate connected device (208) is used to download the content.

The first and second telecommunication networks can be the same network. In an exemplary embodiment, said first telecommunication network is an access network as a DSL, cable, a mobile network such as UMTS, CDMA 2000, WiMax or any other known or later developed access network.

In an exemplary embodiment, the second telecommunication network may be a very simple narrow band access to internet (as we will see through this second telecommunication network, not much information is going to be exchanged).

As in the systems shown in figure 2, for scalability reasons, the Key Server Node may be situated in a different location than the service provider and connected to the Service Provider through a third telecommunication network 209 (which can be the same as the first or the second telecommunication network). But of course, the Key server may be physically in the same location of the Service Provider.

Some of the functions of the Key Server Node may be:
- To authenticate the end device to guarantee its identity. This is done for example, against the data available in systembackend databases. In an exemplary embodiment, every device must be entitled in the system before it can receive any keys for playback.
- To provide the encryption key needed to encrypt the media content before downloading to the end device.
- To evaluate if the end device is legitimate to play the content according to the entitlement rules and the consumption or playback conditions. The Entitlement Rules (also known as Usage Rules) are the Rules, usually set by the service provider, defining under which conditions the content is allowed to be played, said conditions may include not only conditions about when and how the media content is allowed to be played but also the end devices (or type of end devices) allowed to play the media content and maybe the end users allowed to play the media content. The playback conditions are the particular conditions under which, the content is actually to be consumed or played said condition includes not only when and how the media content is to be played (that is, the particular playback environment) but also the end device which is going to play the media content and maybe includes also the end user of the end device (if there is more than one user using the end device) which is going to play the media content. Matching of both, the entitlement rules and the playback conditions (that is, under which conditions the content is allowed to be played and the particular conditions under which, the content is actually requested to be played ) should give a positive or negative answer to allow the play of the media content. In other words, the key server takes the playback permission decisions (that is, whether the end device is entitled to play the media content or not).
- If as a result of the evaluation, the playback decision is positive the key server node should provide to the end device through a secure channel, the decryption key (or set of decryption keys) needed to decrypt the media content which has been downloaded to the end device.

In some embodiments the evaluation is not performed directly by the key server node, but the key server node requests the evaluation to another network node (typically the service provider) and the result of the evaluation is sent back to the server key node.

The entitlement rules can be, for example, subscriptions permissions, allowed users, days and times when the content can be played, type of media player which can play the content, maximum number of times the content can be played. The consumption or playback conditions can be for example, time and date of the consumption, type of media player, number of times the content has been played by the user, current identity of the user using in the device, identity of the end device and/or type of the end device which is going to play the content

Unlike other methods, in the proposed embodiments, the evaluation of the entitlement rules is made in a network node and not in the end device and the downloading of the encrypted content does not depend on the evaluation of the entitlement rules (as said evaluation is not made before the downloading of the content), that is, the requested media content is encrypted and downloaded to the end device independently on whether the device is entitled or not. Of course, the content is encrypted and therefore not playable until the end device receives the correspondent key.

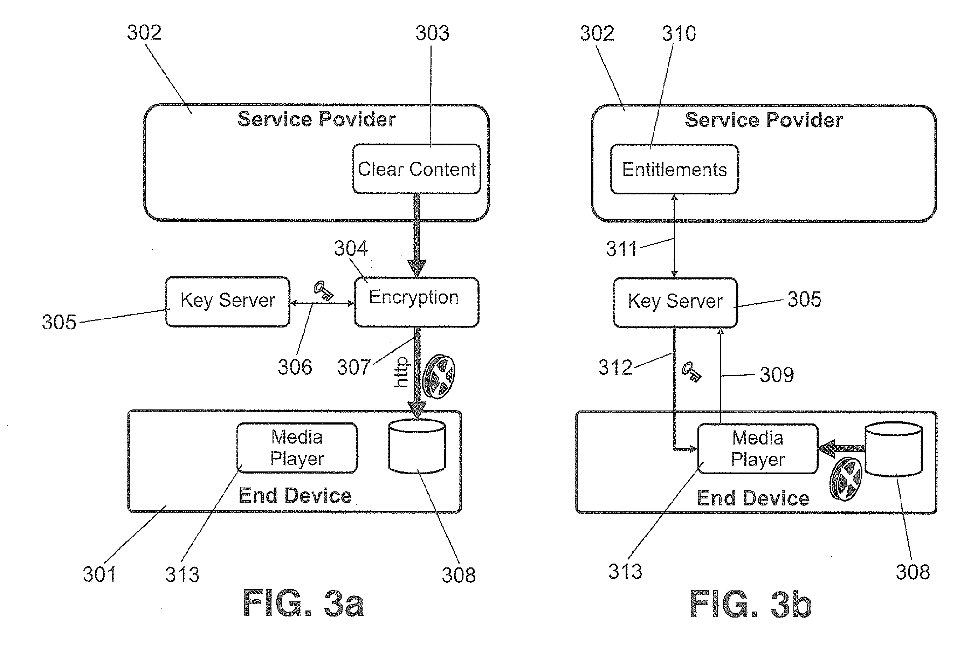

In an exemplary embodiment, the proposed solution is going to be applied in a first type of scenario where the end device has connection capabilities, i.e. it can communicate with the key server node, (figure 3a and 3b) at playback time. A permanent connection during the whole playback time is not required, just a single transaction with a server at the beginning of the playback. In an exemplary embodiment, the transaction may be a simple web connection using a reduced amount of bandwidth (a few kilobytes at most) during a fraction of a second, so any kind of connection, even a low bit rate one (e.g. GPRS) would be enough, what includes in this scenario the vast majority of the mobile multimedia devices in the market. In this type of scenarios when the content is requested to be played by the user, a brief check (key request) is done within the key server in the network in order to evaluate the playback conditions and the entitlement rules (in an exemplary embodiment, this check can be requested by the end device for example through an HTTP GET at playback start). If the evaluation is positive, the key server sends the correspondent key to the end device and the content can be decrypted and played.

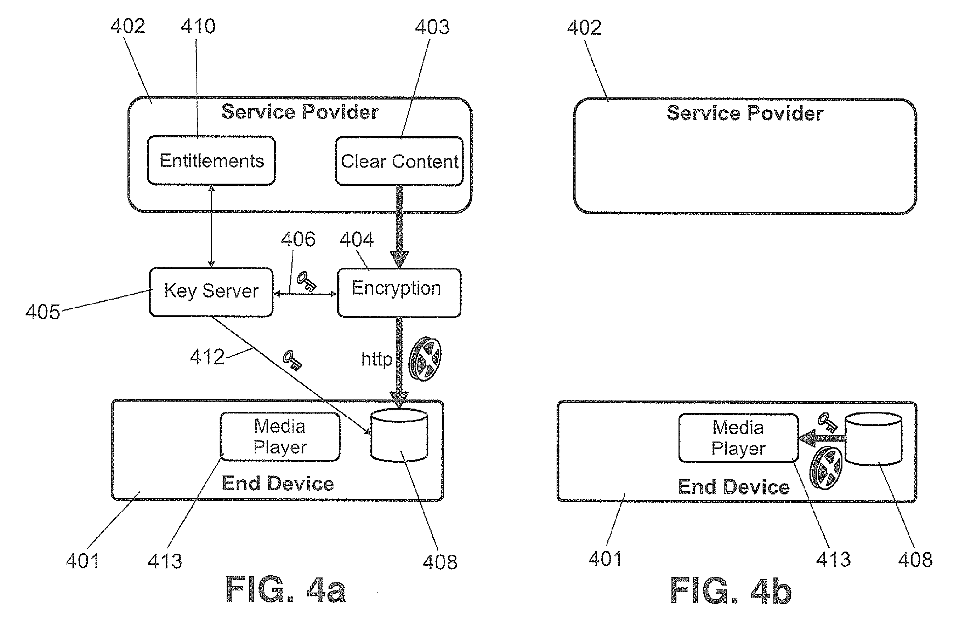

In an alternative embodiment, the proposed solution is going to be applied in a second type of scenario where the end device has no connection capabilities (at least not with the key server node) at playback time (figures 4a and 4b). In these extreme cases the proposed solution is to shift even more intelligence to the network: during the downloading process of the requested media content, the key server in the network evaluates (or requests the evaluation of) the entitlement rules according to the present conditions and may take into account the identity of the users who can play the content in the end device. If the evaluation is positive, the key server node downloads into the device only the decryption keys of the content which is present in the device and for which the playback will be allowed under those conditions.

In an exemplary embodiment the downloaded decryption keys are valid for a limited period during the offline status (e.g. the rest of the day). The keys may be downloaded in encrypted form, so only the device media player will be able to use them. At next downloading or synchronization process (when there is a connection established with the key server) keys validity will be re-evaluated and expired keys will be deleted from the device.

This second type of scenario is the most complex, indeed. Considering the conditions (e.g. the date, the playbacks already consumed, the products purchased by the user, etc) when the communication between the end device and the key server is done (this communication can be for example for a new content downloading or a communication for keys retrieval or updating), the network will decide which keys might be required by the end device for the contents that he has available in the device and if any of the device users is entitled to play said contents. Whether the keys are finally used or not will depend on the end user; the end device can just keep track of which have been used and report it during next communication between the end device and the key server.

In an exemplary embodiment, if there are several users which can use the same end device, the entitlement rules may be evaluated for each user (that is, taking into account the user which is going to reproduce the media content) and specific key for each user may be downloaded.

Figures 3a and 3b show schematically a block scheme according to an exemplary embodiment in the first type of scenario.

In a first step, the end device (301) sends a download request to the service provider (302). Of course, for carrying out the download, certain information is needed. If said information is not included in the download request, then, usually communication is established between the service provider and the end device to exchange said information. The information necessary depends on the provider. It may require a secure identification of the device and/or user requesting the content (e.g. authentication), identification of the requested content, version required of the requested content etc. Here the authentication of the device is not so relevant because the content cannot be played without the keys, so the authentication of the device can be made when requesting the keys

In a second step (306), the Key Server (305) provides the key necessary to encrypt the requested content (303) and then the content is encrypted (304) and downloaded to the end device (307). Then the end device stores the encrypted content in a device memory (308).

In an alternative embodiment, the content is not encrypted at the time of the downloading but it has been encrypted previously with a Key provided by the Key Server, and stored in the service provider already encrypted. Then when there is a download request, the encrypted media content is downloaded and stored in the end device.

In an exemplary embodiment the encryption Key is the same for several (or even all) users of the end device (if more than one).

This phase of communicating with the service provider to exchange information and to download the content (usually known as "sync" phase) is shown in fig. 3a. As explained before (figure 2b), in an alternative embodiment, the end device is not directly connected to the service provider, but it is connected (through a wired or a wireless connection) to an intermediate device which is connected to the first communication network to exchange the information with the service provider and to download the content (an then it gives said downloaded content to the end device). In other words, the sync phase is done through and intermediate device with network connection.

Then when the user wants to play the Encrypted content (which is commonly known by the "play" phase, shown in figure 3b), the end device (301) sends a Key Request (309) to the Key Server (305). This Key Request may include among others, an end device ID, information about the end device capabilities, a user ID (especially if several users have access to the end device), content ID (which may includes the content profile).

When receiving the key request, the key server node performs the authentication of the end device (in order to do that, the communication protocol used between the end device and the key server node is a protocol which includes the secure authentication of the end device)

Then the Key server consults the Entitlement rules (310). These entitlement rules can be stored in the Key Server or can be stored in the service provider. In this latter case, the Key Server should contact the Service Provider (311) to have access to the entitlement rules.

Taking into account the playback conditions and maybe also data provided by the end device (or stored in the Key Server for the end user), the Key Server evaluates if the Entitlement Rules are fulfilled and take a decision about whether the end user of the end device is allowed to play the content or not.

These playback conditions may be obtained by the Key Server Node, either because they are stored by the Key Server Node, so the key server node only have to look for said data in his internal databases (for example, date and time of the consumption or number of times the media content have been played) or because the end device provides said conditions to the Key Server (for example, the capacities of the media player reproducing the media, end device ID, type of end device, end device capabilities).

In an alternative embodiment, the evaluation is not performed physically in the key server node, but the key server node requests the evaluation to another network node (typically the service provider) and the result of the evaluation is sent back to the server key node.

If the decision is positive (the end device is allowed to play the content), the Key server sends the correspondent Key to decrypt the media content to the End Device (312) and the End device (usually the Media Player 313) decrypts and plays the content. Usually the Key is sent with some associated metadata (e.g. securely signed) with simple usage conditions (output conditions as for example unencrypted HD output may be forbidden during playback).

In order to have a track of the content usage, the Key Server may store a log with the date and time when the content is played and other information.

Figures 4a and 4b show schematically a block scheme method according to an exemplary embodiment in the second type of scenario. As before, two main phases or stages are going to be distinguished: the phase of communicating with the service provider to exchange information and to download the content: "sync" phase (fig. 4a) and the phase when the user wants to play the encrypted content: "play" phase (fig. 4b).

The first part of the process (request, encryption and download of the content) may be identical to the method described above for the first type of scenario.

That is, firstly the end device (401) sends a download request to the service provider (402) (in this step is exchanged download information as explained before for the first step of the above embodiment for the first type of scenario). Then, in second step, the Key Server (405) provides (406) the key necessary to encrypt the requested content (403) and then the content is encrypted (404) and downloaded to the end device (407). Then the end device stores the encrypted content in a device memory (408).

In an alternative embodiment, the content is not encrypted at the time of the downloading but it has been encrypted previously, with a Key provided by the Key Server, and stored in the service provider already encrypted. Then when there is a download request, the encrypted media content is downloaded and stored in the end device.

In an exemplary embodiment the encryption Key is the same for several (or even all) users of the end device (if more than one).

This is done exactly in the same way as performed for the first type of scenario.

However, the second part of the process is different in this second scenario. - At the time of the downloading (usually after the downloading but before finishing the connection in which the content has been downloaded), the Key server evaluates if the just downloaded content (and maybe also other contents stored in the end device) might be accessible by the end device. As in the above described method, in order to do that, the Key server may consult the Entitlement rules (410). These entitlement rules can be stored in the Key Server or can be stored in the service provider. In this latter case, the Key Server should contact the Service Provider (411) to have access to the entitlement rules.

In an alternative embodiment, this evaluation can be done after the downloading, when the end device communicates the Key Server Node for a keys retrieval.

Taking into account the playback conditions for the period foreseen until the next communication between the end device and the key server or the service provider (this communication can be for example for a new content downloading or a communication for keys retrieval or updating), the Key Server evaluates if the Entitlement Rules are fulfilled and take a decision about whether the end device is allowed to play each of the evaluated content or not. In an exemplary embodiment, also data provided by the end device (or stored in the Key Server for the end device) is taken into account for the evaluation.

In an alternative embodiment, the evaluation is not performed physically in the key server node, but the key server node requests the evaluation to another network node (typically the service provider) and the result of the evaluation is sent back to the server key node.

As in the method explained for the first scenario, before the evaluation of the Entitlement Rules the key server node performs the authentication of the end device.

In this second type of scenario the playback conditions are not exactly known, because the evaluation of the entitlement rules is not made at the time of the playback but before the consumption. For that reason, here the conditions evaluated are the current conditions and the keys downloaded would have a limited time frame (e.g. the rest of the days, certain amount of hours), in general until the next expected communication between the end device and the key server or the service provider (this communication can be for example for a new content downloading or a communication for keys updating), In an exemplary embodiment, on said next communication (next download or a specific communication for keys updating), the decryption keys validity will be re-evaluated and expired keys will be deleted from the device and usually the log is uploaded to the Key Server, so the playback is accounted.

If the decision is positive (the end user is allowed to play the content), the Key server sends the correspondent Keys to decrypt the media contents to the End Device (412).

When the user wants to play a content, the player requests the key to a local storage (e.g. and internal HTTP agent). If the key is there, it will be delivered (usually unconditionally) and a log will be stored. Then with said key, the media player accesses (414) the content in the memory (408), and the content is played.

So in the solution proposed for this scenario, the content will be downloaded in the end device in any case (independently whether the user is entitled to play the media content or not) but now at playback time, there is no decision and/or evaluation about the entitlement of the end device (because the decision is made by a network node and the end device has no network connection capabilities at playback time) or request of the keys to a remote key server; that is, this decision and the key download is made before the playback time and at playback time if the key is already present in the device, the content will be played.

In an exemplary embodiment, if there are several users which can use the same end device, the entitlement rules may be evaluated for each user and specific keys for each user may be downloaded.

As it can be seen, in both scenarios the decision for delivering the decryption keys is taken in the network and, therefore, there is no decision and/or evaluation about the entitlement of the user at the end device, as in the prior art DRM solutions. And in both scenarios, in an exemplary embodiment, the playback conditions are the conditions at the date and time of the evaluation (which will be the date and time of the playback in the first type of scenario and the date and time of the downloading or the date and time of a communication between the end device and the key server node for keys updating, in the second type of scenario)

In an exemplary embodiment, the Key Server Node may authenticate the end device (for example, when receiving the Key Request). In order to do that, in an exemplary embodiment, the Key Server can use side certificates in the HTTP stack of the Apple CoreMedia, a Marlin MS3 client or any other authentication protocol commonly used in end devices.

In an exemplary embodiment the Key Server can deliver the decryption key to the end device through a secure channel, all using a secure protocol (e.g. HTTPS/TLS)

In an exemplary embodiment, the end device could be an iPhone or an Ipad using the standard Apple AES content protection scheme or any other type or mobile or portable device using other existing protocol.

In another exemplary embodiment, the end device can be a connected TV terminal with a Marlin MS3 client (the Marlin protocol for secure media streaming), which also provides the authentication and secure path required for the delivery of the key.

So, as can be seen, the present solution can be applied to a common known end device with no modifications.

The presented embodiments potentially have the following advantages when compared with the prior art:
- **Security:** decisions are taken in the network, not in the client. This makes the secure client much simpler (only needs to manage securely the key download and usage) and therefore easier to secure.
- **Flexibility:** decisions are taken in the network, thus providing a full flexibility perfectly mapped to the operator business rules
- **Interoperability:** requirements at client side are simple and not linked to a particular CAS or DRM. Many existing devices may be used in this context with no or minimal changes, and it is expected that all upcoming new devices will go in this direction
- Price: avoiding the high cost of a full DRM solution may be a big differentiator in the business plan of an operator
- **Provider independence:** the selection of a DRM is always a hard decision that ties the operator with a specific provider for a very long term. Using this network-centric approach with a light (and eventually purely standard) end device avoids this undesirable dependence.
- **Open Internet:** As it can be seen for the above described embodiments, unlike other solutions known in the prior art, the embodiments are focused in the usage of the downloaded content and not in the download process (the solutions focused in the download process could not efficiently used in a "sync and go" scenario). Moreover, the proposed embodiments do not need any kind of control on the network elements delivering the content, making this solution valid for the Open Internet.
- **Network friendly:** this network-centric model is obviously highly beneficial for a network equipment provider, but it is also an attractive model for network operators offering multimedia services, as the value of the delivery chain is shifted to the network, instead of putting a very significant part of the investment in the hard-to-control terminal side.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof. The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method for media content protection, said method comprising:
a) establishing a first connection with a service provider (202) through a first communication network (206)
b) sending through said connection, a download request of a certain media content , wherein said request to download the media content is sent in response to a request to download the media content initiated by an end-user of an end device (201); said media content having associated entitlement rules which define under which playback conditions the media content is allowed to be played
c) encrypting the requested media content with an encryption key provided by a key server node (203)
d) downloading the requested encrypted media content
e) storing the encrypted media content in the end device
f) authenticating the end device by the key server node
g) evaluating in a network node the entitlement rules associated to the encrypted media content for the end device and for certain playback conditions to decide if the end device is entitled to play the media content under said certain playback conditions
h) if, as a result of the evaluation, it is decided that the end device is entitled to play the media content under said certain playback conditions, the key server node sends the decryption key needed to decrypt the media content to the end device.

2. Method for media content protection according to claim 1 where the step of evaluating the entitlement rules for the end device and for certain playback conditions is performed when an end user of the end device requests the playback of the encrypted media content and said step comprises the following steps:
g1) when the end user of the end device requests to playback the encrypted media content, the end device establishes a connection with the key server node, different from the first connection, through a second telecommunication network
g2) the end-device sending, using said connection, a Key Request (309) to the Key Server Node requesting a decryption key for the encrypted media content.
g3) the Key Server Node obtaining the playback conditions under which the content is going to be played
g4) evaluating the entitlement rules for the encrypted media for certain playback conditions by matching said obtained playback conditions with the entitlement rules associated to the media content
and where the step of authenticating the end device by the key server node is performed when the key server node receives the key request from the end device

3. A method for media content protection according to claims 1 or 2, wherein the network node performing the step of evaluating the entitlement rules is the Key Server node

4. A method for media content protection according to claims 1 or 2, wherein the network node performing the step of evaluating the entitlement rules is the service provider and after the evaluation the result of the evaluation is sent by the service provider to the Key Server Node

5. Method for media content protection according to any of the previous claims where the end device has no direct connection with the first communication network and, therefore, the communication with the service provider is made through an intermediate device (208) connected to the first communication network and connected to the end device.

6. Method for media content protection according to any of the previous claims where the end device has a direct connection with the first communication network and, therefore, the communication with the service provider is made directly by the end device

7. Method for media content protection according to claim 1 where the step of evaluating the entitlement rules for the end device and for certain playback conditions is made at the time of the downloading and if, as a result of the evaluation, the end device is entitled to playback the media content, the key server node sending the decryption key needed to decrypt the media content to the end user, the method further includes:
i) storing in an internal memory of the end device the decryption key sent by the key server
j) when the end user of the end device requests to play the encrypted media content, the end device gets from the internal memory the correspondent key to decrypt said media content

8. A method according to claim 7, where in the evaluating step, the entitlement rules not only are evaluated for the just downloaded media content but for further media content previously downloaded in the end-device, and if, as a result of the evaluation, an end-user of the end device is entitled to playback any of the evaluated media content stored in the end device, the key server sends the decryption key needed to decrypt said media content to the end device.

9. A Key Server node for media content protection, said node comprising:
- means for providing a encryption key to a service provider to encrypt a media content; said media content having associated entitlement rules which define under which playback conditions the media content is allowed to be played
- means for authenticating an end device
- means for evaluating the entitlement rules associated to the encrypted media content for the end device and for certain playback conditions, or means for requesting this evaluation to another network node
- means for sending to the end device through a secure channel of a telecommunication network, the decryption key needed to decrypt the media content, if as a result of the evaluation, the end device is entitled to play the media content under said certain playback conditions.

10. A Key Server node according to claim 9, where the means for evaluating the entitlement rules for the encrypted media for the end device further includes:
- means for receiving from the end device, a Key Request (309) when the end user of the end device requests to play the encrypted media content
- means for securely authenticating the end device from which the request is received
- means for obtaining the playback conditions under which the media content is going to be played
- means for matching said conditions with the entitlement rules associated to the media content.

11. An end device for media content protection comprising:
- means for initiating a request for a media content
- means for receiving and storing said media content encrypted
- means for, when an end user of the end device requests to play the encrypted media content, establishing a connection with a Key Server node through a telecommunication network
- means for sending, using said established connection, a Key Request (309) to the Key Server node (305) requesting a decryption key to decrypt the encrypted media content
- Means for receiving the decryption key
- Means for decrypting the media content with the received decryption key.

12. A system for media content protection, comprising
- An end device having means for initiating a request for a media content, wherein said request triggers a download request to a service provider through a first communication network and where said media content having associated entitlement rules which define under which playback conditions the media content is allowed to be played
- The end device having means for receiving and storing said media content encrypted
- The end device having means for decrypting the media content with a decryption key received from a key server node.
- A key server node having means for providing a key to a service provider to encrypt the media content
- The key server node having means for authenticating the end device which is initiating the request
- The key server node having means for evaluating the entitlement rules associated to the encrypted media for the end device and for certain playback conditions or means for requesting this evaluation to another network node
- The key server node having means for securely sending to the end device the decryption key needed to decrypt the media content, if as a result of the evaluation, the the end device is entitled to play the media content under said playback conditions

13. A system according to claim 12, where the end device further includes:
Means for, when an end user of the end device request to play the encrypted media content, establishing a connection with a Key Server through a telecommunication network
Means for sending, using said established connection, a Key Request (309) to the Key Server node requesting a key to decrypt the encrypted media content

14. A computer program product comprising computer-executable instructions for performing the method according to any of the claims 1-8, .when the program is run on a computer.

15. A digital data storage medium encoding a machine-executable program of instructions to perform a method according to any of the claims 1-8.
